# EUROPEAN PATENT APPLICATION

(11) **EP 1 790 540 A1**
(43) Date of publication of application: **30.05.2007**
(21) Application number: 06123017.3
(22) Date of filing: 26.10.2006
(51) Int. Cl.: B60R 22/48

(54) **Seat belt retractor, seat belt apparatus, and vehicle with seat belt apparatus**

(30) Priority: 24.11.2005 JP 2005338776
(71) Applicant: TAKATA CORPORATION, Minato-ku, Tokyo 106-8510 (JP)
(72) Inventor: Inuzuka, Koji, Tokyo Tokyo 106-8510 (JP); Tanaka, Koji, Tokyo Tokyo 106-8510 (JP); Takao, Masato, Tokyo Tokyo 106-8510 (JP)
(74) Representative: Heunemann, Dieter

(57) **Abstract**

A technology is provided which relates to seat belt storage winding action for storing a seat belt for occupant restraint, installed in a vehicle, by means of an electric motor and which is effective for conducting the seat belt storage control without making a vehicle occupant feel uncomfortable. In a seat belt retractor 1 of a seat belt apparatus 100 which is installed in a vehicle, the motor is activated to wind up a seat belt onto a spool for the seat belt storage control. When the seat belt load acting on the seat belt 3 exceeds a predetermined load value during the activation of the motor, the motor is temporarily stopped. After such control is conducted once or a plurality of times, the seat belt storage control is terminated. In addition, at the termination of the seat belt storage control, the vehicle occupant is informed of the termination of the seat belt storage control by means of an action of winding up the seat belt 3 onto the spool (Fig 1).

## Description

The present invention relates to a technology for storing a seat belt for occupant restraint, which is installed in a vehicle, by means of an electric motor.

Conventionally, a seat belt apparatus which is designed for protecting a vehicle occupant by a seat belt (webbing) for restraining the vehicle occupant is known. For example, Japanese translation of PCT international application No. 2003-507252 (Patent Document 1) discloses a seat belt apparatus having a seat belt retractor of such a structure that a spool (winding shaft) is driven to rotate by an electric motor so as to wind or unwind a seat belt.

The technology disclosed in Patent Document 1 is the structure of the seat belt retractor for a vehicle in which the action of winding the seat belt onto the spool is conducted by the electric motor. However, when this structure is used for the action for winding up a seat belt for the purpose of preventing the seat belt from being kept in a state unwound from the spool, that is, "seat belt storage winding action", the action of winding up the seat belt onto the spool is required to be smoothly conducted according to suitable control for the electric motor. Specifically, during the seat belt storage winding action, the seat belt may be caught in a vehicle occupant or a vehicle seat and the seat belt may be withdrawn by the vehicle occupant. To cope with this situation, there has been considered a following measure. That is, the seat belt storage winding action is temporarily stopped when the load of the seat belt is increased during the seat belt storage winding action and the stoppage is continued until the factor increasing the load is removed. After a predetermined period of time, this seat belt storage winding action is restarted. This operation can be repeated.
However, in such a setting mode of the seat belt storage control that the seatbelt storage control itself is terminated when the number of times that the seat belt storage winding action (the driving of the electric motor) is temporarily stopped reaches a specified number, incomplete storage of the seat belt may occur. In this case, a vehicle occupant who notices such a phenomenon that the storage of the seat belt is incomplete hardly judges whether the cause of this phenomenon is the termination of the seat belt storage control or a failure of the seat belt apparatus and thus feels uncomfortable. Such an arrangement of employing an exclusive detection sensor to detect how much the seatbelt is stored and completing the storage of the seat belt based on the detected information may be employed. In the case employing this arrangement, however, there is required an additional detection sensor and control system, thus making the rationalization of cost difficult.
Accordingly, the present invention has been made to solve the aforementioned problems. The object of the present invention is to provide a technology which relates to seat belt storage winding action for storing a seat belt for occupant restraint, installed in a vehicle, by means of an electric motor and which is effective for conducting the seat belt storage control without making a vehicle occupant feel uncomfortable.

For achieving the object, the present invention is made. The present invention can be typically adapted to a seat belt retractor or a seat belt apparatus to be installed in an automobile. In addition, the present invention can be adapted to a technology for developing a seat belt retractor or a seat belt apparatus to be installed in a vehicle other than automobile, such as aircraft, boat, train, and bus.

The first aspect of the present invention for achieving the aforementioned object is a seat belt retractor claimed in claim 1.
The seat belt retractor claimed in claim 1 is a device to be installed in a vehicle and comprises at least an electric motor, a spool, and a control means.

The spool of this invention is a member which is operated in association with driving of the electric motor to at least wind up a seat belt for occupant restraint. The seat belt capable of being wound onto and unwound from the spool is a long belt to be worn by a vehicle occupant seated in a seat and is sometimes called "webbing". Typically, the vehicle occupant seated in the vehicle seat is restrained by the seat belt when restraint is required such as a vehicle collision. In the present invention, if required, a power transmission mechanism may be suitably disposed between the electric motor and the spool to selectively achieve a connected state where the electric motor and the spool are connected and a disconnected state where the connected state is cancelled. Also in the present invention, the seat belt winding action by the spool may be conducted only by the driving force of the electric motor or by the winding force of an elastic member such as a return spring acting on the spool and the driving force of the electric motor as secondary force.

The control means of the present invention is structured at least as a means for controlling the driving of the electric motor. The control means is typically composed of a CPU (central processing unit), an input/output unit, a storage unit, a peripheral unit, and the like. As for the "controlling the driving of the electric motor " used here, the item to be controlled includes various items such as the operation or stoppage time period of the electric motor, and the value or the supplying time period of voltage and/or current to be supplied to the electric motor. Therefore, the driving direction, the driving time, the driving force, and the like of the electric motor can be varied. The control means may be provided exclusively for the seat belt retractor of the present invention or used also for other control means for controlling driving system and/or electric system of the vehicle.

Further, the control means of the present invention activates the electric motor to rotate the spool to wind up the seat belt when a condition for starting the seat belt storage control is satisfied. This operation enables an action winding up the seat belt onto the spool for preventing the seat belt from being kept in the unwound state from the spool. The action is called "seat belt storage winding action". With regard to "the satisfaction of the condition for starting the seat belt storage control", specifically, the condition for starting the seat belt storage control is satisfied when the seat belt is changed from the worn state to the wearing-cancelled state relative to the vehicle occupant or when it is detected that the seat belt is in the wearing-cancelled state relative to the vehicle occupant. In this case, the determination of the satisfaction of the condition for starting the seat belt storage control may be made according to the open/closed state of a vehicle door corresponding to the seat belt in addition to the state regarding the seat belt.

By the way, during the seat belt storage control, the seat belt may be caught in a vehicle occupant or a vehicle seat and the seat belt may be withdrawn by the vehicle occupant. For this, the control means of the present invention temporarily stops (halts) the driving of the electric motor during the seat belt storage winding action when the seat belt load acting on the seat belt reaches a predetermined load due to the catch of the seat belt in the vehicle occupant or the vehicle seat or due to the seat belt withdrawing operation by the vehicle occupant during the driving of the electric motor. After conducting this control once or a plurality of times, the control means terminates the seat belt storage control. The seat belt load used here can be obtained by detecting the current value of the electric motor. The number of times repeating the seat belt winding action, i.e. the number of times activating and stopping the electric motor typically depends on the relation between the number of times that the seat belt load reaches the predetermined load and the predetermined maximum number of times of stoppage. Specifically, in case that the maximum number of times conducting the seat belt winding action is set to three (the maximum number of times of stoppage is set three), when the number of times that the seat belt load reaches the predetermined load is between one and three, the seat belt winding action is carried out a corresponding number of times. When the third seat belt winding action is carried out, the seat belt storage control itself is terminated. It should be understood that when the seat belt load does not once reach the predetermined load, only the first seat belt winding action is carried out and the seat belt storage control is terminated.

However, the aforementioned seat belt storage control can cause incomplete storage of the seat belt even after the seat belt winding action, i.e. the action of temporarily stopping the driving of the motor, is repeated the maximum number of times (three times). In this case, a vehicle occupant who notices such a phenomenon that the storage of the seat belt is incomplete hardly judges whether the cause of this phenomenon is the termination of the seat belt storage control or a failure of the seat belt apparatus and thus feels uncomfortable and/or uneasy.

For this, the control means of the present invention is adapted to output a driving signal to an operation device at the termination of the seat belt storage control to activate the operation device so as to inform the vehicle occupant of the termination of the seat belt storage control. The "operation device" used here widely includes devices operable to output something of informing the vehicle occupant. Examples of "operating forms" of the operation device include a form that the operation device is activated by the driving signal from the control means and outputs sounds or displays, a form that the operation device is activated by the driving signal from the control means and carries out mechanical action, and the like. Specifically, a device having an audio output function outputting voice, buzz or the like, a device having an indication function outputting characters, figures, images or the like, a device for impressing the vehicle occupant on operation of a movable member, a device having a function applying pressure, drawing force, or vibration to the vehicle occupant, or a device as a combination of two or more of the above devices may be employed as the operation device of the present invention. The timing of informing the vehicle occupant of the termination of the seat belt storage control may be after the termination of the final seat belt winding action, during the final seat belt winding action, or just before the final seat belt winding action. As well as the electric motor, the spool, and the control means of the present invention, the operation device as mentioned above may be a component of the seat belt retractor of the present invention.

According to the aforementioned arrangement of the seat belt retractor of the present invention, the vehicle occupant is informed of the termination of the seat belt storage control through the operation device regardless of whether the storage is complete, i.e. the seat belt is fully wound onto the spool, or incomplete, i.e. the seat belt is not fully wound onto the spool. Accordingly, even when the motor is stopped before the seat belt is fully wound onto the spool, the vehicle occupant notices that the cause is termination of the seat belt storage control not a failure of the seat belt apparatus.

Therefore, the seat belt retractor as claimed in claim 1 has a structure capable of storing a seat belt for occupant restraint to be installed in an automobile by means of driving of an electric motor and can conduct the seat belt storage control without making the vehicle occupant feel uncomfortable and/or uneasy. According to the present invention, there is no need to employ a detection sensor to detect how much the seat belt is stored, thereby facilitating the rationalization of cost of the seat belt retractor.

The second aspect of the present invention for achieving the aforementioned object is a seat belt retractor as claimed in claim 2.
In the seat belt retractor claimed in claim 2, the operation device as claimed in claim 1 comprises the electric motor, the spool, and the seat belt. The control means as claimed in claim 1 outputs a control signal for an operation mode different from that for the seat belt storage control to the electric motor and the vehicle occupant is informed of the termination of the seat belt storage control by the action of winding the seat belt onto the spool according to the control signal. That is, in the present invention, the informing of the termination of the seat belt storage control is conducted by the action of winding up the seat belt for occupant restraint. In this arrangement, the electric motor is controlled differently from the normal seat belt storage control so that the action of winding up the seat belt is performed differently from the seat belt storage control. The informing of the termination of the seat belt storage control may be conducted by controlling the electric motor to repeat an action of winding up the seat belt a plurality of times intermittently within a short period of time or by controlling the electric motor with voltage and/or current and with supplying time period of the voltage and/or current which are different from those of the normal seat belt storage control.

According to the aforementioned arrangement of the seat belt retractor as claimed in claim 2, the vehicle occupant can recognize that a pulling action different from that of the normal seat belt storage control is applied to the seat belt so as to allow the vehicle occupant to be securely informed of the termination of the seat belt storage control without making the vehicle occupant feel uncomfortable. Especially, the winding action of the seat belt is used for informing the vehicle occupant of the termination of the storage control, thereby rationalizing the structure of the seat belt retractor.

The third aspect of the present invention for achieving the aforementioned object is a seat belt apparatus claimed in claim 3.
The seat belt apparatus claimed in claim 3 is an apparatus to be installed in a vehicle and comprises at least a seat belt for occupant restraint, an electric motor, a spool, a control means, a seat belt buckle, a tongue, a buckle detection sensor, a current detection sensor, and an operation device.
The seat belt of the present invention is a long belt to be worn by a vehicle occupant seated in a seat and is sometimes called "webbing". Typically, the vehicle occupant seated in the vehicle seat is restrained by the seat belt when restraint is required such as a vehicle collision. The seat belt buckle of the present invention is a member fixed to a vehicle body. The tongue of the present invention is a member which is attached to the seat belt and is latched to the seat belt buckle when the seat belt is worn by the vehicle occupant. The buckle detection sensor of the present invention is a means for detecting that the tongue is latched to the seat belt buckle. The current detection sensor is a means for detecting current value of the electric motor. The electric motor and the spool of this invention have substantially the same functions as those of the seat belt retractor claimed in claim 1.

When the cancellation of wearing of the seat belt relative to the vehicle occupant is detected based on the information detected by the buckle detection sensor, the control means of the present invention determines that a condition for starting a seat belt storage control is satisfied and thus activates the electric motor to rotate the spool to wind up the seat belt and the control means conduct such a control as to temporarily stop the driving of the electric motor when the current value of the electric motor detected by the current detection sensor reaches a predetermined reference value the during the driving of the electric motor. After the aforementioned control is conducted once or a plurality of times, the control means terminates the seat belt storage control. That is, when the current value of the electric motor reaches the reference value, it is determined that the seat belt is caught in the vehicle occupant or the vehicle seat or that the seat belt is withdrawn by the vehicle occupant so that the seat belt load acting on the seat belt is increased. In addition, the control means of the present invention outputs a driving signal to an operation device at the termination of the seat belt storage control. The operation device of the present invention operates according to the driving signal from the control means, thereby informing the vehicle occupant of the termination of the seat belt storage control. As mentioned above, the control means and the operation device of the present invention can exhibit substantially the same works and effects as those of the control means and the operation device claimed in claim 1.

According to the aforementioned arrangement of the seat belt apparatus of the present invention, the vehicle occupant is informed of the termination of the seat belt storage control through the operation device regardless of whether the storage is complete, i.e. the seat belt is fully wound onto the spool, or incomplete, i.e. the seat belt is not fully wound onto the spool. Accordingly, even when the motor is stopped before the seat belt is fully wound onto the spool, the vehicle occupant notices that the cause is termination of the seat belt storage control not a failure of the seat belt apparatus.

Therefore, the seat belt apparatus as claimed in claim 3 has a structure capable of storing a seat belt for occupant restraint to be installed in an automobile by means of driving of an electric motor and can conduct the seat belt storage winding action without making the vehicle occupant feel uncomfortable and/or uneasy. According to the present invention, there is no need to employ a detection sensor to detect how much the seat belt is stored, thereby facilitating the rationalization of cost of the seat belt apparatus.

The fourth aspect of the present invention for achieving the aforementioned object is a seat belt apparatus claimed in claim 4.
In the seat belt apparatus claimed in claim 4, the operation device as claimed in claim 3 comprises the electric motor, the spool, and the seat belt. The control means as claimed in claim 3 outputs a control signal for an operation mode different from that for the seat belt storage control to the electric motor and the vehicle occupant is informed of the termination of the seat belt storage control by the action of winding the seat belt onto the spool according to the control signal. As mentioned above, the control means and the operation device of the present invention can exhibit substantially the same works and effects as those of the control means and the operation device claimed in claim 3.

According to the aforementioned arrangement of the seat belt apparatus as claimed in claim 4, the vehicle occupant can recognize that a pulling action different from that of the normal seat belt storage control is applied to the seat belt so as to allow the vehicle occupant to be securely informed of the termination of the seat belt storage control. Especially, the winding action of the seat belt is used for informing the vehicle occupant of the termination of the storage control, thereby rationalizing the structure of the seat belt apparatus.

The fifth aspect of the present invention for achieving the aforementioned object is a vehicle with a seat belt apparatus claimed in claim 5.
The vehicle with a seat belt apparatus claimed in claim 5 is a vehicle comprising at least a seat belt apparatus as claimed in claim 3 or claim 4 and has a vehicle seat in which a vehicle occupant is seated. The "vehicle seat" used here includes a driver seat in which a driver is seated, a front passenger seat, and a rear seat located behind the driver seat and the front passenger seat. The control means of the seat belt apparatus is adapted to detect the cancellation of the wearing of the seat belt when the tongue latched to the seat belt buckle is released from the seat belt buckle by the vehicle occupant seated in the vehicle seat. In the vehicle of the present invention, all of a part of components of the seat belt apparatus are accommodated in an accommodating space in the vehicle such as an accommodating space in a pillar, an accommodating space in a seat, or an accommodating space in another part of the vehicle.
According to the invention as claimed in claim 5, there is provided a vehicle with a seat belt apparatus which is capable of conducting the seat belt storage winding action using an electric motor without making a vehicle occupant feel uncomfortable and/or uneasy.

As mentioned above, the present invention relates to seat belt storage control for storing a seat belt for occupant restraint which is installed in a vehicle by means of driving of an electric motor and employs a structure of outputting a driving signal to an operation device at the termination of the seat belt storage control and driving the operation device according to the driving signal so as to inform the vehicle occupant of the termination of the seat belt storage control, thereby conducting the seat belt storage winding action without making the vehicle occupant feel uncomfortable.

Hereinafter, embodiments of the present invention will be described in detail with reference to drawings:
Fig. 1 is an illustration schematically showing the structure of a seat belt apparatus 100 according to an embodiment;
Fig. 2 is an illustration showing the schematic structure of a seat belt retractor 1 shown in Fig. 1;
Fig. 3 is a flow chart for the "seat belt storage control process" of this embodiment; and
Fig. 4 is a time chart of the seat belt storage winding action in the "seat belt storage control process" of this embodiment.

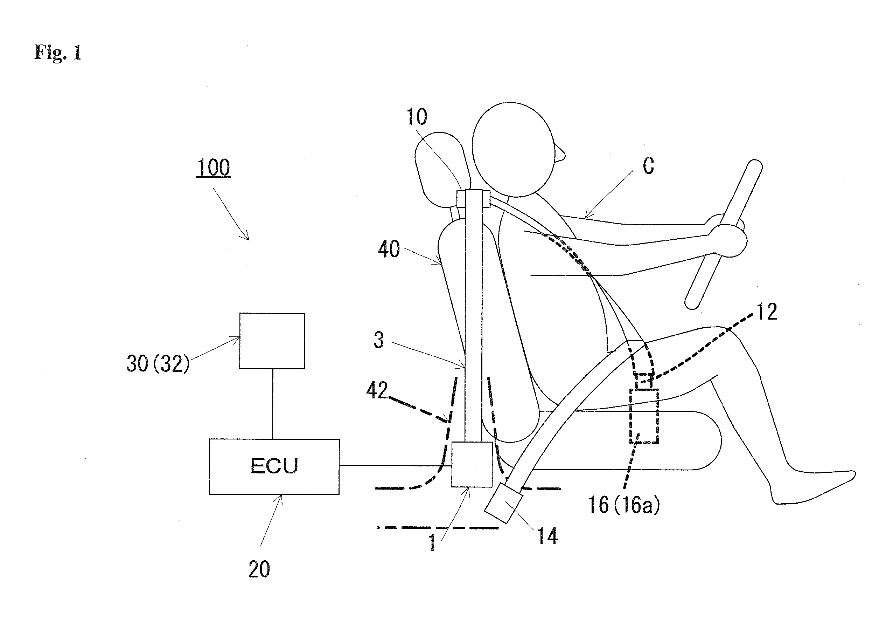

As shown in Fig. 1, the seat belt apparatus 100 of this embodiment is a seat belt apparatus for a vehicle, which is installed in an automotive vehicle as "vehicle with the seat belt apparatus" of the present invention and mainly comprises a seat belt retractor 1, a seat belt 3, a deflection fitting 10, a tongue 12, an outer anchor 14, a seat belt buckle 16, and an ECU 20. In addition, an input element 30 is installed in the vehicle to detect information about collision prediction or collision occurrence of the vehicle, information about the driving state of the vehicle, information about the sitting position and the body size of a vehicle occupant seated in a seat, information about traffic conditions around the vehicle, information about weather condition and about time zone, and the like and to input such detected information to the ECU 20. The detected information of the input element 30 is transmitted to the ECU 20 anytime or at predetermined intervals and is used for the operation control of the seat belt apparatus 100 and the like.

The input element 30 of this embodiment includes a collision information detection sensor 32 for detecting information about a vehicle collision such as a prediction of a vehicle collision and an occurrence of actual vehicle collision. The collision information detection sensor 32 is a sensor capable of detecting (measuring) information (signal) about distance, speed, and acceleration of a collision object (another vehicle, an obstacle, a pedestrian, or the like) relative to the subject vehicle and also detecting (measuring) accelerations in three-axial (X-axis, Y-axis, and Z-axis) directions acting on the subject vehicle. The collision information detection sensor 32 may be composed of a single detection sensor or a combination of plural single detection sensors. Specifically, millimeter wave radar, laser radar, acceleration sensor, and camera sensor may be used as the collision information detection sensor 32.

In this embodiment, a vehicle door sensor is also mounted to detect the opening/closing state of a vehicle door, that is, detect whether the vehicle door is in the open state or closed state, but not shown. The information detected by the vehicle door sensor is transmitted to the ECU 20.

The seat belt 3 is a long belt (webbing) to be used for restraining a vehicle occupant C (sometimes referred to as "driver") seated in a vehicle seat 40 as a driver seat. The seat belt 3 corresponds to the "seat belt for occupant restraint" of the present invention and the vehicle seat 40 corresponds to the "vehicle seat in which the vehicle occupant is seated" of the present invention. The seat belt 3 is withdrawn from the seat belt retractor 1 fixed relative to the vehicle and extends through a deflection fitting 10 provided around an area about the shoulder of the vehicle occupant C and is connected to an outer anchor 14 through a tongue 12. The deflection fitting 10 has a function of holding the seat belt 3 to the area about the shoulder of the occupant C and guiding the seat belt 3. By inserting the tongue 12 to a seat belt buckle 16 fixed to the vehicle body, the seat belt 3 becomes into the state worn by the vehicle occupant C. The tongue 12 corresponds to the "tongue" of the present invention and the seat belt buckle 16 to which the tongue 12 can be latched corresponds to the "seat belt buckle" of the present invention.

The seat belt buckle 16 has a built-in buckle switch 16a. The buckle switch 16a is adapted to detect that the tongue 12 is inserted into the seat belt buckle 16. The information detected by the buckle switch 16a is transmitted to the ECU 20 which determines whether the seat belt 3 is in the worn state or in the wearing-cancelled state. Specifically, when the buckle switch 16a detects buckle ON operation, the ECU 20 determines that the seat belt 3 becomes into the worn state. On the other hand, when the buckle switch 16a detects buckle OFF operation, the ECU 20 determines that the seat belt 3 becomes into the wearing-cancelled state. The buckle switch 16a corresponds to the "buckle detection sensor for detecting that the tongue is latched to the seat belt buckle" of the present invention.

The seat belt retractor 1 is a device capable of performing the action of winding or unwinding the seat belt 3 via a spool 5 and a motor 7 as will be described later. The seat belt retractor 1 corresponds to the "seat belt retractor" of the present invention. The seat belt retractor 1 is installed in an accommodating space in a B-pillar 42 of the vehicle in the embodiment shown in Fig. 1. The seat belt retractor may be installed in another accommodating space, for example, in a vehicle seat a side roof rail, and the like.

The ECU 20 has a function of conducting the control of the seat belt retractor 1 and other operational mechanisms based on the input signals from the input element 30 and comprises a CPU (Central processing unit), an input/output unit, a storage unit, a peripheral unit, and the like. Particularly in this embodiment, the ECU 20 controls the motor 7, as will be described later, of the seat belt retractor 1. Specifically, the ECU 20 controls the voltage level, the amount of current supplied to an electromagnetic coil of the motor 7 and the direction of the current supply so as to vary the rotational speed, the rotational direction, the rotational period of time, and the rotational torque (output) of a shaft of the motor 7. The ECU 20 is structured as a means for controlling the driving of the motor 7 and also as a means for controlling a power transmission mechanism 9, as will be described later, to switch between the state where the power of the motor 7 is transmitted to the spool 5 and the state where the power is not transmitted to the spool 5. The ECU 20 corresponds to the "control means" of the present invention. The ECU 20 may be exclusive to the seat belt retractor 1 or used also for other control means for controlling driving system and/or electric system.

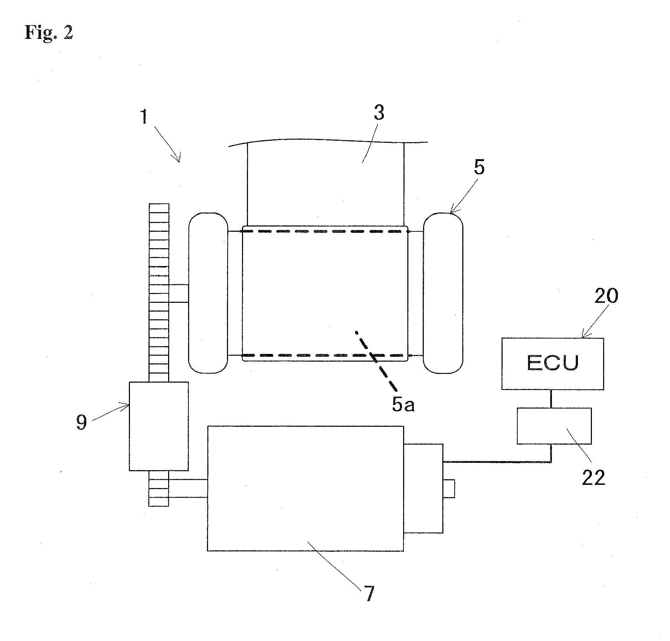

As shown in Fig. 2, the seat belt retractor 1 mainly comprises the spool 5, the motor 7, and the power transmission mechanism 9. The aforementioned ECU 20 may be a component of the seat belt retractor 1.

The spool 5 is formed in a columnar or cylindrical shape of which outer periphery (seat belt contact face) functions as the wind-up surface on which the seat belt 3 is wound. The spool 5 performs the action of winding the seat belt 3 onto the wind-up surface 5a by rotating in the seat belt winding direction and also performs the action of unwinding the seat belt 3 from the wind-up surface 5a by rotating in the seat belt unwinding direction. The spool 5 corresponds to the "spool" of the present invention.

The motor 7 is structured as an electric motor and is adapted to transmit power to the spool 5 through the power transmission mechanism 9. The motor 7 rotates in such a direction that the spool 5 performs the action of winding the seat belt 3 when the motor is controlled to rotate in the seat belt winding direction, while the motor 7 rotates in such a direction that the spool 5 performs the action of unwinding the seat belt 3 when the motor is controlled to rotate in the seat belt unwinding direction. The motor 7 corresponds to "electric motor" of the present invention. In this embodiment, the seat belt retractor 1 is also provided with a motor current detector 22 for detecting current value of the motor 7. The motor current detector 22 corresponds to "current detection sensor for detecting the current value of the electric motor" of the present invention. Information about current value detected by the motor current detector 22 is transmitted to the ECU 20 and is used for determination of current value in "seat belt storage control process" as will be described later.

The power transmission mechanism 9 is arranged between the spool 5 and the motor 7 and is structured as a mechanism capable of taking a connected state where the spool 5 and the motor 7 are connected (power transmission operation mode) and a disconnected state where the connected state is cancelled (power transmission disconnection mode). The power transmission mechanism 9 is sometimes referred to as so-called "clutch" which comprise a combination of gears. The connected state of the power transmission mechanism 9 is a state where the power of the motor 7 is allowed to be transmitted to the spool via the power transmission mechanism 9. When the motor 7 is controlled to rotate in this connected state, the power of the motor 7 is transmitted to the spool 5 via the power transmission mechanism 9. During this, the rotational speed of the motor 7 is reduced by the power transmission mechanism 9. On the other hand, in the disconnected state of the power transmission mechanism 9, the physical connection between the spool 5 and the motor 7 is cancelled so as to allow the easy unwinding (withdrawing) of the seat belt 3 from the spool 5 manually. It should be noted that the spool 5 and the motor 7 may be directly connected without the power transmission mechanism 9 between the spool 5 and the motor 7, if required.

In this embodiment, the power transmission mechanism 9 is constructed as a so-called "single-stage clutch", but not illustrated. Accordingly, when the motor 7 is controlled to rotate with a predetermined motor output in the power transmission operation mode of the power transmission mechanism 9, the rotation of the motor 7 is transmitted to the spool 5 with the rotational speed being reduced so that the spool 5 is driven to rotate with predetermined torque at predetermined rotational speed. Instead of the power transmission mechanism 9, a power transmission mechanism capable of changing the rotational torque and the rotational speed of the spool into several stages may be employed. For example, in case of a two-stage clutch capable of changing the rotational torque and the rotational speed of the spool into two stages, the power transmission mechanism can be set in a high-reduction ratio mode with relatively high rotational torque and relatively low rotational speed in order to respond to a need for winding of the seat belt onto the spool with large belt tension. On the other hand, the power transmission mechanism can be set in a low-reduction ratio mode with relatively low rotational torque and relatively high rotational speed in order to respond to a need for rapid winding of the seat belt onto the spool.

In this embodiment, the seat belt retractor 1 of this embodiment has the following seven seat belt control modes relating to the state of the seat belt 3. Based on these seat belt control modes, the control of the motor 7 and the power transmission mechanism 9 are performed by the ECU 20. Another seat belt control mode may be added to these seat belt control modes.

### (1) Belt storage mode

Belt storage mode is a control mode in which the seat belt 3 is not used and fully wound onto the spool 5. In the seat belt retractor 1 in the belt storage mode, the motor 7 is not activated and the power transmission mechanism 9 is set to the power transmission disconnection mode. Therefore, only very weak belt tension is applied to the seat belt 3 and the power consumption is zero.

### (2) Belt withdrawing mode

Belt withdrawing mode is a control mode in which the seat belt 3 is withdrawn from the spool 5 so as to be worn by the occupant. The seat belt retractor 1 in the belt withdrawing mode is also set in the power transmission disconnection mode. Therefore, the seat belt 3 can be withdrawn manually with small force. Also in this case, the motor 7 is not activated so that the power consumption is zero.

### (3) Belt winding and fitting mode

Belt winding and fitting mode is a control mode in which after the seat belt 3 is withdrawn and the tongue (the tongue 12 in Fig. 1) is inserted into and latched with the seat belt buckle to turn ON the buckle switch (the buckle switch 16a in Fig. 1), excessively withdrawn part of the seat belt 3 is wound in order to fit the seat belt 3 to the occupant and a control mode in which when the occupant moves so as to withdraw a predetermined amount of the seat belt 3 from the normally used state of the seat belt 3 (at this point, the buckle switch is in the ON state) and then the occupant returns to the original position, the withdrawn part of the seat belt 3 is wound. In the seat belt retractor 1 in the belt winding and fitting mode, the power transmission mechanism 9 is set to the power transmission operation mode and the motor 7 is controlled to rotate at high rotational speed in the belt winding direction. Therefore, the seat belt 3 is rapidly wound onto the spool 5 and then the motor 7 is stopped when very small predetermined belt tension is generated, whereby the seat belt 3 is worn by and fitted to the occupant.

### (4) Normal wearing mode (comfortable mode)

Normal wearing mode (comfortable mode) is a control mode in which the occupant wears the seat belt 3 in the normal state after the belt winding and fitting mode is terminated. In the seat belt retractor 1 in the normal wearing mode, the motor 7 is not activated and the power transmission mechanism 9 is set in the power transmission disconnection mode. Therefore, only very weak belt tension is applied to the seat belt 3 so that the vehicle occupant can wear the seat belt 3 without any stress. In addition, the power consumption is zero.

### (5) Warning mode

Warning mode is a control mode in which when the system detects dozing of the driver during running or detects an obstacle around the vehicle when the vehicle is running and the seat belt is in the normal wearing mode, the seat belt 3 is wound repeatedly predetermined times so as to warn the driver. In the seat belt retractor 1 in the warning mode, the motor 7 is controlled to be alternately activated and stopped several times. Therefore, the operation of applying relatively strong belt tension (which is weaker than that of the belt tension during the emergency mode as will be described later) and very weak belt tension onto the seat belt 3 is alternately repeated, thereby drawing the driver's attention to the dozing and the obstacle around the vehicle.

### (6) Emergency mode

Emergency mode is a control mode which is set when the vehicle extremely likely has a collision with an obstacle or the like during running in the normal wearing mode or following the aforementioned warning mode. In the seat belt retractor 1 in the emergency mode, the power transmission mechanism 9 is set in the power transmission operation mode and the motor 7 is controlled to rotate at high rotational speed with high rotational torque in the belt winding direction. Therefore, the motor 7 is stopped when predetermined extremely strong belt tension is generated on the seat belt 3 after the seat belt 3 is rapidly wound onto the spool 5, thereby securely restraining the vehicle occupant with the seat belt 3.

### (7) Belt winding and storing mode

Belt winding and storing mode is a control mode in which the seat belt 3 is fully wound to be in the storage state. In the seat belt retractor 1 in the belt winding and storing mode, the power transmission mechanism 9 is set to the power transmission operation mode and the motor 7 is controlled to rotate in the belt winding direction so as to wind up the seat belt onto the spool 5. Consequently, the action of rapidly winding up the withdrawn seat belt 3 onto the spool 5, that is, "seat belt storage winding action" is conducted, thereby preventing the seat belt 3 from being kept in the unwound state from the spool 5. Thus, the motor 7 is stopped when the seat belt 3 is fully wound and a predetermined belt tension which is very weak is developed, whereby the seat belt 3 becomes to the belt storage mode in which the aforementioned very weak belt tension is applied to the seat belt 3.

With regard to the belt winding and storing mode, the seat belt 3 may be caught in the vehicle occupant or the vehicle seat and the seat belt 3 may be withdrawn by the vehicle occupant when the belt storage winding mode is conducted. For this, this embodiment is adapted to repeat control of stopping (halting) the seat belt storage winding action for a predetermined time period from when the seat belt load is increased during the seat belt storage winding action to when the factor increasing the load is eliminated and, after that, restarting the seat belt storage winding action. That is, in this embodiment, when seat belt load is increased during the seat belt storage winding action, an interval is provided for stopping the seat belt storage winding action for a predetermined time period. The increase in seat belt load is determined by the ECU 20 based on the current value of the motor 7 detected by the motor current detector 22 shown in Fig. 2. Specifically, when the current value of the motor 7 exceeds the reference value during the seat belt storage winding action, it is determined that the seat belt 3 is caught in the vehicle occupant or the vehicle seat or that the seat belt is withdrawn by the vehicle occupant, that is, in the "increased load state".

Also in this embodiment, the maximum number of times that seat belt winding action is repeated is set to three (the maximum number of stoppages is three). Accordingly, when the number of times that the seat belt load reaches the predetermined load is between one and three, the seat belt winding action is carried out a corresponding number of times. When the third seat belt winding action is carried out, the seat belt storage control itself is terminated. It should be understood that when the seat belt load does not once reach the predetermined load, only the first seat belt winding action is carried out and the seat belt storage control is terminated. According to this embodiment, when the motor 7 is driven and the seat belt load acting on the seat belt 3 reaches to the predetermined load in the belt winding and storing mode, the driving of the motor 7 is temporarily stopped. After such control is conducted once or several times, the seat belt storage control is terminated.

However, the aforementioned seat belt storage control can cause incomplete storage of the seat belt even after the action of temporarily stopping the seat belt winding action or the driving of the motor 7 is repeated the maximum number of times (three times). In this case, a vehicle occupant who notices such a phenomenon that the storage of the seat belt is incomplete hardly judges whether the cause of this phenomenon is the termination of the seat belt storage control or a failure of the seat belt apparatus and thus feels uncomfortable and/or uneasy.

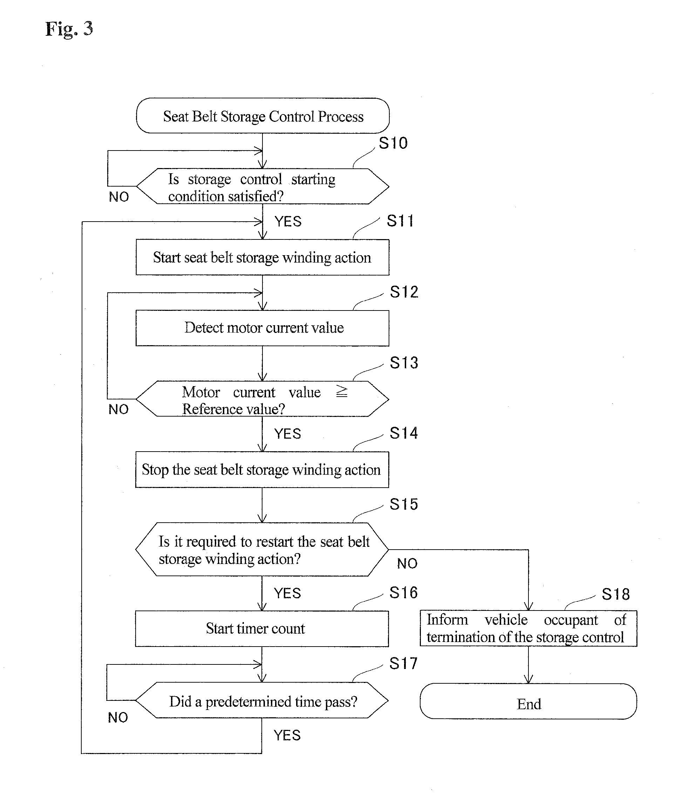

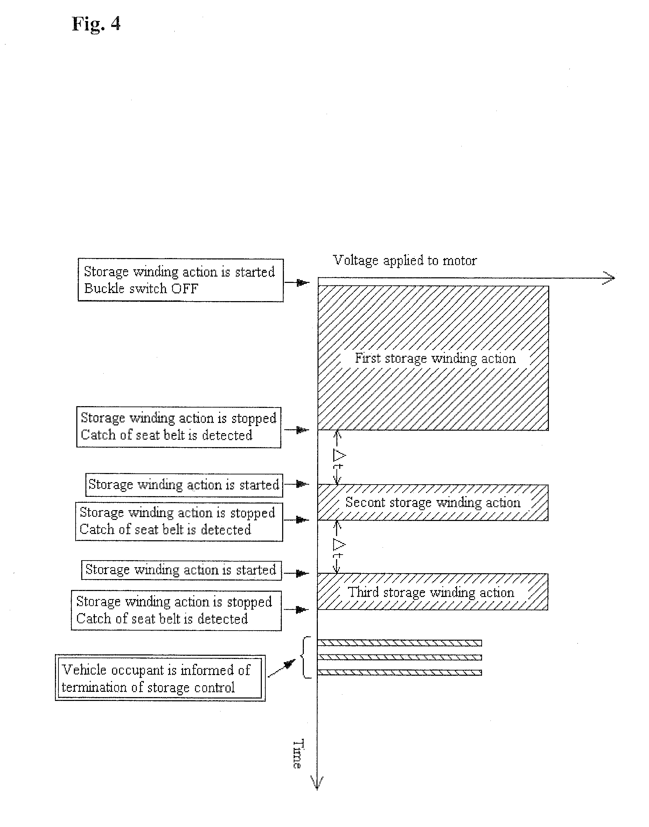

In this embodiment, for this, an informing control for informing the vehicle occupant of the termination of the seat belt storage control (sometimes, called simply "storage control") when the seat belt storage control is terminated. Specifically, when the seat belt load is increased during the seat belt storage control, the seat belt storage winding action is temporarily stopped. In addition, when the seat belt storage control is terminated, the vehicle occupant is informed of the termination of the seat belt storage control by means of an action of winding up the seat belt 3. Hereinafter, this arrangement will be described in more detail with reference to Fig. 3 and Fig. 4.

Fig. 3 is a flow chart for the "seat belt storage control process" of this embodiment and Fig. 4 is a time chart of the seat belt storage winding action in the "seat belt storage control process" of this embodiment.

In the seat belt storage control process as shown in Fig. 3, in step S10, it is determined whether or not a storage control starting condition is satisfied. Specifically, when the release of insertion of the tongue 12 relative to the seat belt buckle 16 shown in Fig. 1 is detected by the buckle switch 16a, that is, when the seat belt 3 is changed from the worn state to the released state relative to the vehicle occupant, it is determined that the storage control starting condition is satisfied. This determination is achieved by the ECU 20 which detects the information from the buckle switch 16a. The determination whether or not the storage control starting condition is satisfied may be made based on the information about the open/closed state of the vehicle door in addition to the information of the state of the seat belt buckle. In the step S10, the process continues until the seat belt buckle is changed from the ON state to the OFF state and proceeds to step S11 when it is determined that the seat belt buckle is changed from the ON state to the OFF state (YES in step S10).

In step S11, the power transmission mechanism 9 of the seat belt retractor 1 is set to the power transmission operation mode and the motor 7 is controlled to rotate the spool 5 to wind up the seat belt (a constant voltage V1 is supplied as shown in Fig. 4), thereby performing the seat belt storage winding action (first time). The seat belt storage winding action may be conducted only by the driving force of the motor 7 or by the winding force of an elastic member such as a return spring acting on the spool 5 and the driving force of the motor 7 as secondary force.

In step S12, the motor current detector 22 detects the current value of the motor during the seat belt storage winding action. In step S13, it is determined whether or not the detected current value exceeds the reference current value. The processes of step S12 and step S13 continue until the detected current value exceeds the reference current value. When the current value of the motor exceeds the reference current value (YES in step S13), it is determined that the seat belt load is increased so that the process proceeds to step S14. In the step S14, the seat belt storage winding action is temporarily stopped. The factor increasing the seat belt load may be catch of the seat belt 3 in the vehicle occupant or the vehicle seat 40 or the seat belt withdrawing operation by the vehicle occupant.

In step S15, it is determined whether or not it is required to restart the seat belt storage winding action (second time). When it is determined that it is required to restart the seat belt storage winding action (YES in step S15), the process proceeds to step S16 and step S17 where it is determined whether or not the stopping time period of the seat belt storage winding action reaches a predetermined time period (stopping interval Δt shown in Fig. 4). When the stopping time period of the seat belt storage winding action reaches the predetermined time period (YES in step S17), the process returns to step S11 to restart the seat belt storage winding action (second time) until step S14 similarly to the first seat belt storage winding action. The seat belt storage winding action from step S11 to step S14 is repeated based on the predetermined maximum repeating number of times. In the time chart shown in Fig. 4, the maximum repeating number of times is three so that the time chart shows a case that the seat belt storage winding action is repeated three times in total.

On the other hand, when it is determined that it is required to finish the seat belt storage winding action (NO in step S15), that is, when it is required to terminate the seat belt storage control, the process proceeds to step S18 informing the vehicle occupant of the termination of the storage control. In this embodiment, the informing of the termination of the storage control is conducted by the winding action of the seat belt 3. Specifically, the motor 7 is controlled to wind up the seat belt 3 differently from the seat belt storage winding action in the storage control, for example, in such a form as to wind up (pull) the seat belt 3 intermittently as shown in Fig. 4 (to intermittently supply a voltage V2 shown in Fig. 4). In this case, the motor 7 is a means which is activated based on an activation signal from the ECU 20 and thus winds up the seat belt 3 in such a manner as to inform the vehicle occupant of the termination of the seat belt storage control. The motor 7 corresponds to the "driving device" of the present invention.
It is preferable that the voltage and current to be supplied to the motor is controlled to perform the winding action of the seat belt 3 for informing so as to allow the vehicle occupant to distinguish the winding action for informing from the normal seat belt storage winding action and not to make the vehicle occupant feel uncomfortable.

As mentioned above, according to the aforementioned seat belt storage control process, the vehicle occupant is informed that the storage control itself is terminated by means of winding action of the seat belt regardless of whether the storage is complete, i.e. the seat belt 3 is fully wound onto the spool 5, or incomplete, i.e. the seat belt 3 is not fully wound onto the spool 5. Accordingly, even when the motor 7 is stopped before the seat belt 3 is fully wound onto the spool 5, the vehicle occupant notices that the cause is termination of the storage control not a failure of the seat belt apparatus. Therefore, this allows the storage control to be conducted without making the vehicle occupant feel uncomfortable and/or uneasy.
According to this embodiment, the winding action of the seat belt 3 is used for informing the vehicle occupant of the termination of the storage control, thereby rationalizing the structure of the seat belt retractor 1 and the seat belt apparatus 100.
According to this embodiment, there is no need to employ a detection sensor to detect how much the seat belt 3 is stored, thereby facilitating the rationalization of cost of the seat belt retractor 1 and the seat belt apparatus 100.
Therefore, according to this embodiment, there is provided a seat belt retractor 1 and a seat belt apparatus 100, and a vehicle with the seat belt apparatus 100 capable of conducting the seat belt storage control of a seat belt 3 by means of a motor 7 without making the vehicle occupant feel uncomfortable and/or uneasy.

The present invention is not limited to the aforementioned embodiments, so various variations and modifications may be made. For example, the following embodiments as variations of the aforementioned embodiments may be carried out.

Though the above embodiment has been described with regard to a case that the winding action of the seat belt 3 driven by the motor 7 is used as a means for informing the vehicle occupant of the termination of the seat belt storage control, the present invention may employ other arrangement. For example, a device having an audio output function outputting voice, buzz or the like, a device having an indication function outputting characters, figures, images or the like, a device for impressing the vehicle occupant on operation of a movable member other than the seat belt 3, a device having a function applying pressure, drawing force, vibration or the like to the vehicle occupant, or a device as a combination of two or more of the above devices may be employed as a means for informing the vehicle occupant of the termination of the seat belt storage control.
The timing of informing the vehicle occupant of the termination of the seat belt storage control may be after the termination of the final seat belt winding action or during the final seat belt winding action, or just before the final seat belt winding action.

Though the above embodiment has been described with regard to a case that the informing of the termination of the seat belt storage control is conducted by controlling the motor 7 to intermittently wind up the seat belt 3, the present invention may employ another form for winding up the seat belt other than the intermittent winding. For informing the vehicle occupant of the termination of the seat belt storage control, all that is required is to conduct the seat belt winding action differently from the normal seat belt storage winding action. For example, the motor 7 is controlled to conduct the seat belt winding action for informing at a winding speed or winding acceleration which is different from that of the normal seat belt storage winding action.

Though the above embodiment has been described with regard to the seat belt apparatus 100 for the vehicle occupant seated in the driver seat, the present invention can be adapted to seat belt apparatuses for vehicle occupants seated in vehicle seats other than the driver seat, such as a front passenger seat and a rear seat located behind the driver seat and the front passenger seat.

Though the above embodiments have been described with regard to the seat belt retractor 1 and the seat belt apparatus 100 to be installed in an automobile, the arrangement of the seat belt retractor of the present invention can be adapted to seat belt retractors and seat belt apparatuses to be installed in vehicles for transport of vehicle occupants such as automobile, aircraft, boat, train, and bus.

## Claims

1. A seat belt retractor to be installed in a vehicle comprising:
an electric motor;
a spool which is capable of winding a seat belt for occupant restraint in association with driving of said electric motor; and
a control means which controls the driving of said electric motor, wherein
said control means conducts such a control as to activate said electric motor to rotate said spool to wind up the seat belt when a condition for starting seat belt storage control is satisfied, and temporarily stop the driving of said electric motor in cases where seat belt load acting on the seat belt reaches a predetermined load during the driving of the electric motor, wherein after the aforementioned control is conducted once or a plurality of times, the control means terminates the seat belt storage control and, in addition, outputs a driving signal to an operation device at the termination of the seat belt storage control to activate the operation device to inform the vehicle occupant of the termination of said seat belt storage control.

2. A seat belt retractor as claimed in claim 1, wherein
said operation device comprises said electric motor, said spool, and said seat belt,
said control means outputs a control signal for an operation mode different from that for said seat belt storage control to said electric motor and the vehicle occupant is informed of the termination of said seat belt storage control by the action of winding the seat belt onto said spool according to said control signal.

3. A seat belt apparatus to be installed in a vehicle comprising:
a seat belt for occupant restraint which can be worn by a vehicle occupant; an electric motor; a spool which is capable of winding said seat belt in association with driving of said electric motor; a control means which controls the driving of said electric motor; a seat belt buckle fixed to the vehicle; a tongue which is attached to said seat belt and is latched to said seat belt buckle when said seat belt is worn, a buckle detection sensor for detecting that said tongue is latched to said seat belt buckle, a current detection sensor for detecting the current value of said electric motor, and an operation device, wherein
when the cancellation of wearing of said seat belt relative to the vehicle occupant is detected based on the information detected by said buckle detection sensor, said control means determines that a condition for starting a seat belt storage control is satisfied and thus activates the electric motor to rotate said spool to wind up the seat belt and said control means conduct such a control as to temporarily stop the driving of the electric motor when the current value of said electric motor detected by said current detection sensor reaches a predetermined reference value during the driving of the electric motor, wherein after the aforementioned control is conducted once or a plurality of times, said control means terminates the seat belt storage control and, in addition, outputs a driving signal to the operation device at the termination of the seat belt storage control, and wherein
said operation device is activated according to the driving signal from said control means, thereby informing the vehicle occupant of the termination of said seat belt storage control.

4. A seat belt apparatus as claimed in claim 3, wherein
said operation device comprises said electric motor, said spool, and said seat belt,
said control means outputs a control signal for an operation mode different from that for said seat belt storage control to said electric motor and the vehicle occupant is informed of the termination of said seat belt storage control by the action of winding the seat belt onto said spool according to said control signal.

5. A vehicle comprising a seat belt apparatus as claimed in claim 3 or 4 and a vehicle seat in which a vehicle occupant is seated, wherein
said control means of said seat belt apparatus is adapted to detect the cancellation of the wearing of said seat belt when said tongue latched to said seat belt buckle is released from said seat belt buckle by the vehicle occupant seated in the vehicle seat.
